# EUROPEAN PATENT SPECIFICATION

(11) **EP 0 792 794 B1**
(45) Date of publication and mention of the grant of the patent: **02.05.2002**
(21) Application number: 97301305.5
(22) Date of filing: 27.02.1997
(51) Int. Cl.: B62K 23/04

(54) **Uniaxial bicycle control unit**
Einachsen-Steuereinrichtung für ein Fahrrad
Dispositif uniaxial de commande pour une bicyclette

(30) Priority: 29.02.1996 US 609909
(43) Date of publication of application: 03.09.1997
(73) Proprietor: Shimano Inc., Osaka 590-0824 (JP)
(72) Inventor: Nagae, Makoto, c/o Shimano Inc., Sakai, Osaka 590 (JP)
(74) Representative: Pacitti, Paolo

(56) References cited:
- EP-A- 0 628 475
- DE-A- 4 442 630
- DE-U- 29 512 035

## Description

### BACKGROUND OF THE INVENTION

The present invention is directed to bicycle control devices and, more particularly, to a control unit having multiple operating members which rotate about a common axis.

Japanese Utility Model No. 44-26571 discloses a twist grip shifter of the type wherein a rotatable annular member is mounted about a longitudinal axis of a bicycle handlebar and is connected to a derailleur control cable. The rotatable annular member may be rotated about the axis of the handlebar for alternately pulling and releasing the derailleur cable which, in turn, controls a derailleur for shifting gears. Similar twist grip shifters are disclosed in USP 4,900,291 and 5,197,927. Other types of shifters include traditional shifting levers that are rotated about an axis that is oriented perpendicular to the handlebar. Other bicycle control units include brake levers which are separately mounted to the bicycle for controlling the bicycle brakes.

Such conventional bicycle control units are always mounted separately from each other, and each control unit typically rotates in a different manner about a different axis. Especially in the case of shifting and braking, the cyclist's hand must be removed from one control unit in order to operate the other. The different location and operational principles of each device complicates control of the bicycle.

### SUMMARY OF THE INVENTION

The present invention is directed to a control unit having multiple operating members which are disposed in close proximity to each other and which rotate about a common axis. The common location makes it easy to operate both control devices at the same time, and the common rotational operation makes bicycle operation more ergonomic. When different operating members are connected to different control devices, then both control devices may be operated at the same time. The structure is also more aesthetically pleasing, since it does not have the cluttered look created by mounting multiple control devices at different locations on the bicycle.

In accordance with the invention, there is provided a uniaxial composite bicycle control unit for mounting about a longitudinal axis at one end of a handlebar of a bicycle, the control unit comprising: a first rotary control body for attachment to a first control cable; and a secondary rotary control body for attachment to a second control cable; wherein the first rotary control body and the second rotary control body rotate about the axis and the first rotary control body is disposed adjacent to the second rotary control body; the first rotary control body comprises a first annular member having a first diameter and is elongated for forming a handle grip (as is known from DE-A444263 ; characterised in that the second rotary control body comprises a second annular member having a second diameter greater than the first diameter.

Preferably, the first rotary control body is coupled to the second rotary control body to facilitate assembly on the bicycle.

The first and second rotary control units may be connected to any type of control device, including brake and shifting devices. Preferably, one of the first rotary control body and the second rotary control body is connected to a shifting cable, and the other one of the first rotary control body and the second rotary control body is connected to a brake cable. Alternatively, one of the first rotary control body and the second rotary control body is connected for winding a transmission cable, and wherein the other one of the first rotary control body and the second rotary control body is connected for unwinding a transmission cable.

### BRIEF DESCRIPTION OF THE DRAWINGS

Figure 1 is a side view of a particular embodiment of a uniaxial composite control unit according to the present invention;
Figure 2 is a cross sectional view of the control unit taken along line II-II in Figure 1; and
Figure 3 is a side view of an alternative embodiment of a uniaxial composite control unit according to the present invention.

### DETAILED DESCRIPTION OF THE EMBODIMENTS

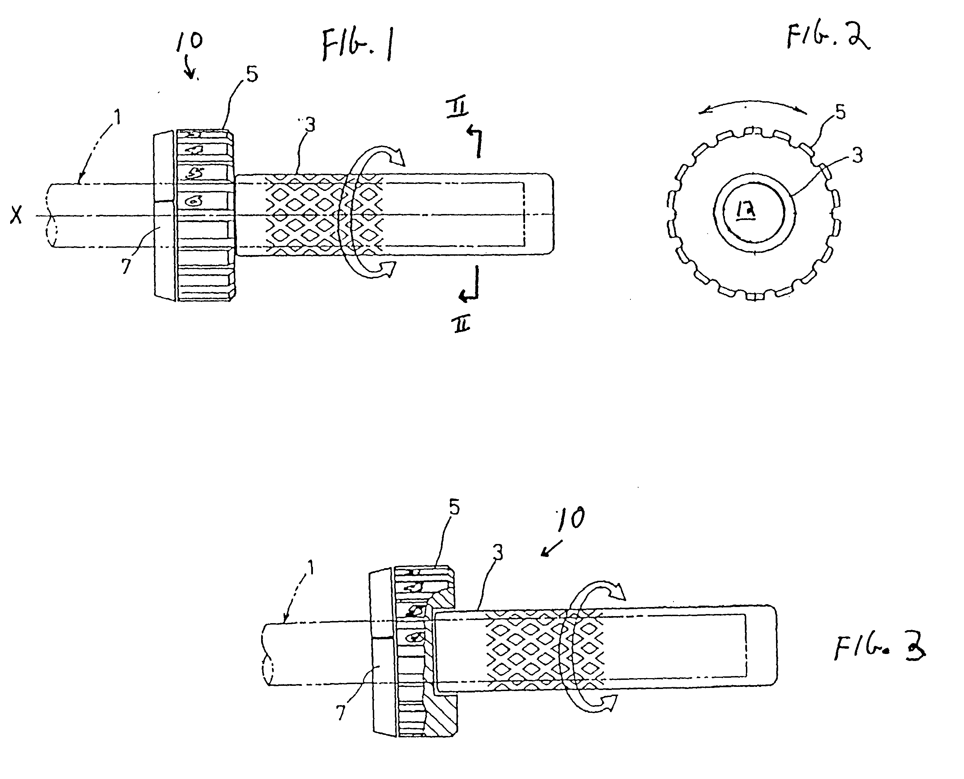

Figure 1 is a side view of a particular embodiment of a uniaxial composite control unit 10 according to the present invention. Control unit 10 comprises a first rotary control body 3 and a second rotary control body 5, both of which can be connected to control cables. First rotary control body 3 and second rotary control body 5 each have an opening 12 (Figure 2) for fitting the rotary control bodies 3,5 to a structural member 1 of the bicycle, such as the bicycle handlebars. First and second rotary control bodies 3,5 have the same axis of rotation, and the first and second rotary control bodies 3, 5 can be rotated independently. As used herein, "have the same axis of rotation" means not that they are exactly the same in a strict scientific sense, but that they are both within a range that can be considered the same for practical control purposes.

In this embodiment, the second rotary control body 5 has a larger outside diameter than that of the first rotary control body 3 so that it may be readily distinguished from the first rotary control body 3. The larger diameter of second rotary control body 5 also allows second rotary control body 5 to be rotated with less force. Both rotary control bodies 3,5 may be easily operated by the cyclist's thumb and forefinger, and rotary control body 3 is elongated to function as a grip. In this case the entire portion of rotary control body 3 may be rotatable, or else a part of rotary control body 3 may be rotatable and another part may be an immobile grip part that is fixed to the handlebar shaft. Second rotary control body could be structured in a similar manner.

The first and second rotary control bodies 3,5 may be installed so that they nearly touch, and in some cases both rotary control bodies 3,5 may share a common mounting sleeve so that they are connected together. In that case, first and second rotary control bodies 3,5 may be provided to the handlebars separately and connected by a connecting member, or the first and second rotary control bodies may be made as a single unit that can be installed on the handlebars. There may be a fixed housing, such as a cable winding housing, between the first rotary control body 3 and second rotary control body 5. Alternatively, the first and second rotary control bodies may be adjacent to each other, but again they do not have to touch. With either construction, the second rotary control body 5 can be operated by the thumb and forefinger, while first rotary control body 3 may be operated by the fingers between the middle finger and the little finger while still holding on to the grip.

As shown in Figure 2, the second rotary control unit 5 may also be provided so that a part of it overlaps the rotary body of the first rotary control body 3. The adoption of such a structure makes it easy to grasp the first rotary control body 3 while placing the thumb and forefinger on the second rotary control body. This kind of structure may be readily used even by children with small hands.

The connection between the first and second control bodies and the control cables may be effected in a number of ways. For example, a suitable winding drum may be provided to the periphery of the rotating shaft of the control body, and the cable may be directly wound around the drum. The rotation of the control body around the handlebar shaft may be transmitted via a gear or the like to a second rotating body that rotates around a shaft that is perpendicular to the handlebar shaft, and the control cable may be wound around this second rotating body. The cable may be moved in the direction of the handlebar shaft by a cam that is provided to the rotating shaft of the rotating body. To provide suitable force amplification for the operation of brakes and other devices which require higher operating force than ordinary derailleurs, the control cable may be connected to the rotating body in the manner disclosed in US Patent No 5,590,564, entitled "Bicycle Control Device" filed November 20, 1995 and assigned to Shimano, Inc.. The control cable may be provided to the outside of the handlebar shaft, or to the inside of the handlebar shaft, and the winding body may also be provided to the inside of the handlebar shaft.

When the second control body 5 is used as a shifting unit, then, as shown in Figure 1, an indicator 7 can also be provided in the vicinity of the moving parts. In Figure 1, the numerals indicating the gears are provided on the grip part of the second rotary control body 5, and an indicator line setting member 7 (which may also function as a housing for the cable winding members) is fixed on the handlebars adjacent to it. The numerals can also be placed on the handlebars 1. When the second rotary control body 5 is used as a shifting unit, moreover, it is also possible to set the indicator line on a member that is made of a transparent material and that does not rotate relative to the handlebars for at least part of this unit, and to place numerals on an internal rotating portion of the second rotary control body 5.

While the above is a description of the various embodiments of the present invention, further modifications may be employed without departing from the scope of the present invention. Thus, the scope of the invention should not be limited to the specific structures disclosed. Instead, the true scope of the invention should be determined by the following Claims. Of course, although labeling symbols are used in the Claims in order to facilitate reference to the figures, the present invention is not intended to be limited to the constructions in the appended figures by such labeling.

## Claims

1. A uniaxial composite bicycle control unit for mounting about a longitudinal axis (X) at one end of a handlebar (1) of a bicycle, the control unit comprising:
a first rotary control body (3) for attachment to a first control cable; and
a secondary rotary control body (5) for attachment to a second control cable; wherein
the first rotary control body (3) and the second rotary control body (5) rotate about the axis (X) and the first rotary control body (3) is disposed adjacent to the second rotary control body (5);
the first rotary control body (3) comprises a first annular member having a first diameter and is elongated for forming a handle grip; **characterised in that**:
the second rotary control body (5) comprises a second annular member having a second diameter greater than the first diameter.

2. The control unit according to Claim 1 wherein the first rotary control body (3) is coupled to the second rotary control body (5).

3. The control unit according to any preceding claim wherein one of the first rotary control body (3) and the second rotary control body (5) is connected to a shifting cable, and wherein the other one of the first rotary control body (3) and the second rotary control body (5) is connected to a brake cable.

4. The control unit according Claim 1 or Claim 2 wherein one of the first rotary control body (3) and the second rotary control body (5) is connected for winding a transmission cable, and wherein the other one of the first rotary control body (3) and the second rotary control body (5) is connected for unwinding a transmission cable.

## Patentansprüche

1. Eine einachsige kombinierte Fahrradsteuervorrichtung zum Befestigen um eine Längsachse (X) an einem Ende einer Lenkstange (1) eines Fahrrads, wobei die Steuervorrichtung aus folgendem besteht:
einem ersten drehbaren Steuerkörper (3) zur Verbindung mit einem ersten Steuerkabel; und
einem zweiten drehbaren Steuerkörper (5) zur Verbindung mit einem zweiten Steuerkabel; wobei
der erste drehbare Steuerkörper (3) und der zweite drehbare Steuerkörper (5) sich um die Achse (X) drehen und der erste drehbare Steuerkörper (3) sich angrenzend an den zweiten drehbaren Steuerkörper (5) befindet;
der erste drehbare Steuerkörper (3) aus einem ersten ringförmigen Teil mit einem ersten Durchmesser besteht und verlängert ist, um einen Handgriff zu bilden; **dadurch gekennzeichnet, daß**:
der zweite drehbare Steuerkörper (5) aus einem zweiten ringförmigen Teil mit einem zweiten Durchmesser, der größer als der erste Durchmesser ist, besteht.

2. Steuervorrichtung gemäß Anspruch 1, wobei der erste drehbare Steuerkörper (3) mit dem zweiten drehbaren Steuerkörper (5) gekoppelt ist.

3. Steuervorrichtung gemäß einem der vorhergehenden Ansprüche, wobei entweder der erste drehbare Steuerkörper (3) oder der zweite drehbare Steuerkörper (5) mit einem Schaltkabel verbunden ist und wobei der andere von entweder dem ersten drehbaren Steuerkörper (3) oder dem zweiten drehbaren Steuerkörper (5) mit einem Bremskabel verbunden ist.

4. Steuervorrichtung gemäß Anspruch 1 oder Anspruch 2, wobei entweder der erste drehbare Steuerkörper (3) oder der zweite drehbare Steuerkörper (5) zum Aufwickeln eines Übertragungskabels verbunden ist und wobei der andere von entweder dem ersten drehbaren Steuerkörper (3) oder dem zweiten drehbaren Steuerkörper (5) zum Abwickeln eines Übertragungskabels verbunden ist.

## Revendications

1. Une unité de commande combinée uniaxe pour bicyclette destinée à être montée autour d'un axe longitudinal (X) à une extrémité d'un guidon (1) d'une bicyclette, l'unité de commande comprenant :
un premier organe de commande rotatif (3) destiné à être rattaché à un premier câble de commande ; et
un organe de commande rotatif secondaire (5) destiné à être rattaché à un second câble de commande ; dans laquelle
le premier organe de commande rotatif (3) et le second organe de commande rotatif (5) tournent autour de l'axe (X) et le premier organe de commande rotatif (3) est disposé de façon adjacente par rapport au second organe de commande rotatif (5) ;
le premier organe de commande rotatif (3) comprend un premier élément annulaire ayant un premier diamètre et est allongé pour former une poignée de guidon ; **caractérisée en ce que** :
le second organe de commande rotatif (5) comprend un second élément annulaire ayant un second diamètre supérieur au premier diamètre.

2. L'unité de commande selon la revendication 1 dans laquelle le premier organe de commande rotatif (3) est accouplé au second organe de commande rotatif (5).

3. L'unité de commande selon n'importe quelle revendication précédente dans laquelle un organe parmi le premier organe de commande rotatif (3) et le second organe de commande rotatif (5) est raccordé à un câble de changement de vitesse, et dans laquelle l'autre organe parmi le premier organe de commande rotatif (3) et le second organe de commande rotatif (5) est raccordé à un câble de frein.

4. L'unité de commande selon la revendication 1 ou la revendication 2 dans laquelle un organe parmi le premier organe de commande rotatif (3) et le second organe de commande rotatif (5) est raccordé pour enrouler un câble de transmission, et dans laquelle l'autre organe parmi le premier organe de commande rotatif (3) et le second organe de commande rotatif (5) est raccordé pour dérouler un câble de transmission.
